# EUROPEAN PATENT APPLICATION

(11) **EP 1 225 405 A2**
(43) Date of publication of application: **24.07.2002**
(21) Application number: 01130856.6
(22) Date of filing: 27.12.2001
(51) Int. Cl.: F25D 13/06, B29C 51/42

(54) **Device and method for cooling thermoformed elements**

(30) Priority: 19.01.2001 IT BO010020
(71) Applicant: COMI S.r.l., I-24040 Zingonia (Bergamo) (IT)
(72) Inventor: Ballabio, Enzo, 24049 Verdellino (Bergamo) (IT); Sertori, Remo, 24049 Verdellino (Bergamo) (IT)
(74) Representative: Negrini, Elena

(57) **Abstract**

A device for cooling thermoformed elements (6) which are molded inside a thermoforming room (7) and subjected to an air flow (2), includes generator means (4) of the air flow (2) and cooling means (3) of the flow (2) before being introduced inside the thermoforming room (7) in order to cool the thermoformed elements (6).

## Description

The present invention relates to devices for thermoforming thermoplastic materials. Particularly the invention refers to a device for cooling thermoformed elements in order to allow their removal from the moulding devices and the following handling.

There are known means fit for cooling a thermoformed element by air flows sucked from the surrounding environment.

The main drawback of known device consists in that the temperature of the introduced air is high and not constant because said air is sucked near the thermoforming machine, where generally there is an environment with very high temperature and subject to strong thermal changes.

Furthermore the generator or moving means of the air flow cause a further temperature increase because frictions, compression and thermal dissipation of the generator means of the air flow.

The known means require thus cooling long time and frequent manual adjustments. This causes production slowdown, higher operator request and the real risk to extract thermoformed elements insufficiently cooled and therefore not sufficiently hardened. These known means involve an increase of the production costs and a low efficiency of the whole thermoforming plant.

There are furthermore known devices cooling the thermoformed element by liquid jet, generally water, nebulized or diffused.

The main drawbacks of these last known means consist in that the cooling of the thermoformed element can be too abrupt and in that the cooling liquid evaporation can raise excessively the environmental humidity, causing discomfort and risks for the operators and possible damages for the electric and electronic fittings.

A further drawback consists in that said cooling liquid can contaminate or pollute the thermoformed element and/or start electrolytic corrosion phenomenons or oxidation in the thermoforming devices, damaging these latter.

The main object of the present invention is to propose a device and a method for cooling thermoformed elements fit for optimizing the cooling process, minimizing its operational times and at the same time avoiding the excessive thermal changes, dangerous for the structural integrity of the aforesaid elements.

Other object is to propose a device fit for providing an efficient cooling independently from environmental conditions, which does not require further manual regulations.

Further object is to propose a method and a device fit to guarantee the cooling process control during all its duration, by acting on the cooling means, and fit to adjust such process to the characteristics of the thermoformed elements.

Further object is to propose a device that does not introduce in the cooling process contaminating or polluting elements or, however, able to corrode or to damage the thermoforming devices.

The above mentioned objects are achieved according to the content of the claims. The characteristics of the present invention are underlined in the following with particular reference to attaches drawing tables, in which:
- figure 1 shows a schematic view of the device object of the present invention;
- figures 2 and 3 show schematic views of respective variants of the figure 1 device;
- figure 4 shows a variant of refrigeration means of the preceding figures.

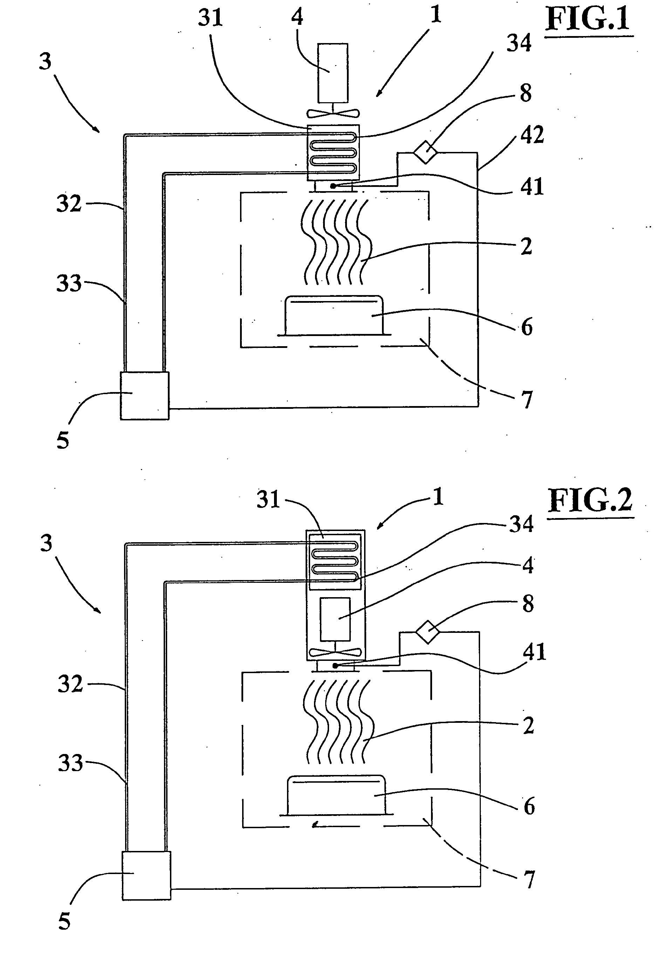

With reference to figure 1, numeral 6 indicates the thermoformed elements contained inside a thermoforming room 7. Such elements 6 are cooled by an air flow 2 refrigerated by cooling means 3 and produced by generator means 4 of the air flow 2, for instance fans or blowers, that sucks the air from the surrounding environment.

The cooling means 3 include radiator means 31, ducts 32 of a cooling fluid 33 and refrigerating means 5.

Inside the radiator means 31, the fluid 33, which flows inside coils 34 or fins or other similar device, subtract heat from a second fluid, in the specific case air 2, which passes through said coils 34. The air crossing such radiator means 31 transfers heat so cooling itself.

The ducts 32 transfer the refrigerant fluid 33 from the refrigerating means 5 to the radiator means 31 and viceversa.

The refrigerating means 5 work according to a compression frigorific cycle of a gaseous fluid or an absorption frigorific cycle of a fluid mixture.

In the preferred embodiment, shown in figure 1, the cooling means 3 are with direct heat exchange and the fluid 33 is a refrigerator fluid, for instance of the type ammonia or fluorocarbons or a fluid mixture of the type water and ammonia.

The device 1 further provides that control means 8 adjust air flow 2 rate and its optimal temperature, by acting respectively on the generator means 4 of the flow 2 and on the cooling means 3, according to cooling level required by the thermoformed elements, or according to their composition and geometric shape.

The device 1 includes thermal sensor means 41 and flow rate sensors, known and not shown, opportunely positioned fit for providing temperature and rate values to said control means 8, which adjust the generator means 4 and cooling means 3 according to said read values to adjust the temperature and rate values to the predefined reference values.

The variant of figure 2 differs from the preferred embodiment in that the radiator means 31 are upstream from the generator means 4.

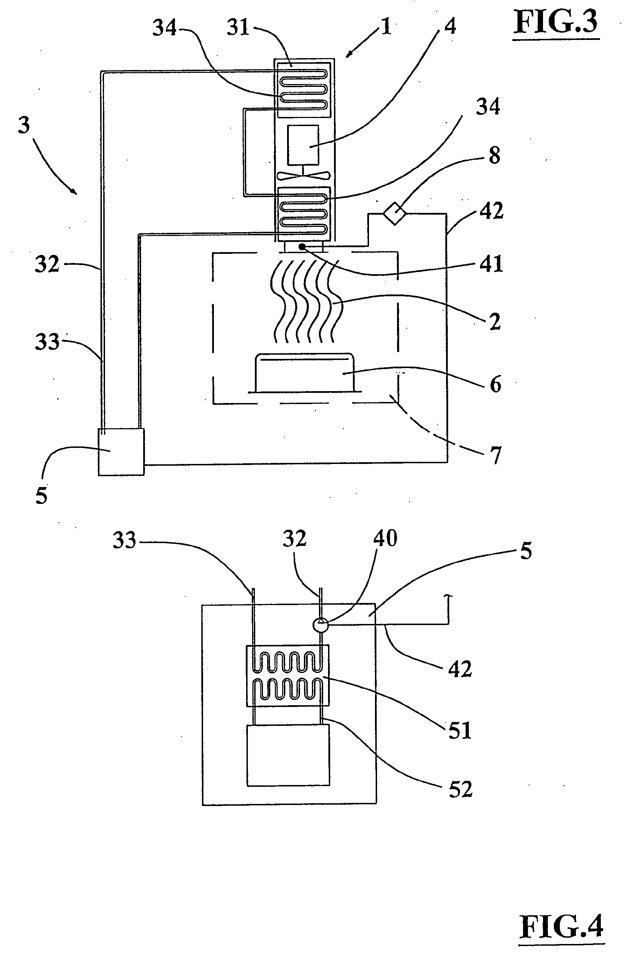

In the variant shown in figure 3, the radiator means 31 and the relative coils 34 are two and they developed upstream and downstream from the generator means 4.

In the variant shown in figure 4, the cooling means 3 are of the indirect heat exchange type and they include heat exchangers 51 in which the fluid 33 said intermediary, generally water, transfers heat, so cooling itself, to a refrigerator fluid 52, of gaseous or fluid mixture type. The intermediary fluid 33 is moved into the ducts 32 by pumping means 40 for instance consisting of an electric circulation pump.

The method for cooling thermoformed elements 6 provides:
- to refrigerate radiator means 31 by refrigerating means 5;
- to cool by the radiator means 31 an air flow 2 generated and direct toward thermoformed elements 6 by generator means 4 of the air flow 2.

The method also provides:
- to cool an air flow 2 upstream or downstream from the generator means 4 by the radiator means 31 respectively positioned upstream or downstream from the generator means 4 of said air flow 2;
   otherwise:
- to cool the air flow 2 upstream and downstream from the generator means 4 by the radiator means 31 positioned upstream and downstream from the generator means 4 of the air flow 2.

The method further includes the following phases:
- to acquire temperature data of the air flow 2 by thermal sensor means 41;
- to communicate the temperature data of the air flow 2 to control means 8;
- to check by the control means 8 the refrigerating means 5 in order to maintain the air flow 2 temperature within a predetermined values range in correspondence of the cooling of the thermoformed element 6.

The method also provides:
- to check the refrigerating means 5 by operating, through the control means 8, pumping means 40 of the circulation of a fluid 33 in a circuit including second heat exchangers 51 of the refrigerating means 5 and the radiator means 31.

The main advantage of the present invention is to provide a device and a method for cooling thermoformed elements fit for optimizing the cooling process, minimizing its operational times and at the same time avoiding the excessive thermal changes, dangerous for the structural integrity of the aforesaid elements.

Other advantage is to provide a device fit to provide an efficient cooling independently from environmental conditions, which does not require further manual regulations and to guarantee the cooling process control during all its duration, by acting on the cooling means, and fit to adjust such process to the characteristics of the thermoformed elements.

Other advantage is to provide a device that does not introduce in the cooling process contaminating or polluting elements or, however, suitable to corrode or to damage the thermoforming devices.

## Claims

1. Device for cooling thermoformed elements (6) which are molded inside a thermoforming room (7) and subjected to an air flow (2), said device (1) being **characterized in that** includes a generator means (4) of the air flow (2) and cooling means (3) of said flow (2) before being introduced inside the thermoforming room (7) in order to cool the thermoformed elements (6).

2. Device according to claim 1 **characterized in that** the cooling means (3) include radiator means (31) connected to refrigerating means (5) through ducts (32) crossed by a fluid (33) cooled by the refrigerating means (5).

3. Device according to claim 2 **characterized in that** said refrigerating means (5) are fluid compression refrigerating means and said fluid (33) is gaseous.

4. Device according to claim 2 **characterized in that** said refrigerating means (5) are fluid absorption refrigerating means and said fluid (33) is a fluid mixture.

5. Device according to claim 3 or 4 **characterized in that** the cooling means (3) are indirect heat exchange cooling means and the refrigerating means (5) include heat exchangers (51), in which the fluid (33) is cooled by a fluid refrigerator (52) of the refrigerating means (5).

6. Device according to claims 5 **characterized in that** the flow rates of the fluid (33) which pass through the radiator means (31) is adjustable.

7. Device according to any of the preceding claims **characterized in that** further includes control means (8) of the cooling air flow rate and temperature.

8. Method for cooling thermoforming elements (6) **characterized in that** provides:
- to cool radiator means (31) through refrigerating means (5);
- to generate an air flow (2) through generator means (4);
- to cool the air flow (2) through the radiator means (31);
- to direct said air flow (2) cooled toward the thermoforming elements (6).

9. Method according to claim 8 **characterized in that** provides to cool the air flow (2) upstream or downstream from the generator means (4).

10. Method according to claim 8 **characterized in that** provides to cool the air flow (2) upstream and downstream from the generator means (4) by the radiator means (31) positioned upstream and downstream from the generator means (4) of the flow (2).

11. Method according to any of the claims from 8 to 10 **characterized in that** provides:
- to take temperature data of the air flow (2) by thermal sensor means (41);
- to send the temperature data of the air flow (2) to control means (8);
- to check by the control means (8) the refrigerating means (5) in order to maintain the temperature of the air flow (2) within a predetermined range of values in correspondence of the cooling of the thermoformed element (6).

12. Method according to claim 11 **characterized in that** provides to check the refrigerating means (5) by operating, through the control means (8), pumping means (40) of circulation of a fluid (33) cooling the radiator means (31).
